# EUROPÄISCHE PATENTSCHRIFT

(11) **EP 1 691 374 B1**
(45) Veröffentlichungstag und Bekanntmachung des Hinweises auf die Patenterteilung: **11.11.2009**
(21) Anmeldenummer: 05026561.0
(22) Anmeldetag: 06.12.2005
(51) Int. Cl.: H01B 3/46, C08K 5/098, F16L 11/04

(54) **Langgestrecktes Gut, insbesondere für die Medizintechnik**
Elongate article, in particular for medical use
Article allongé, en particuler à usage médical

(30) Priorität: 10.02.2005 DE 102005006332
(43) Veröffentlichungstag der Anmeldung: 16.08.2006
(73) Patentinhaber: HEW-Kabel GmbH & Co. KG, 51688 Wipperfürth (DE)
(72) Erfinder: Hauser, Manfred, 58515 Lüdenscheid (DE); Hembach, Heribert, 51688 Wipperfürth (DE)
(74) Vertreter: Mende, Eberhard

(56) Entgegenhaltungen:
- EP-A- 0 106 164
- US-A- 4 451 692
- US-A- 5 916 940

## Beschreibung

Die vorliegende Erfindung betrifft langgestrecktes Gut mit einer Hülle aus einem Silikonkautschuk, wobei die Hülle die äußere Umhüllung (Mantel) eines elektrischen Kabels oder einer Leitungen bildet oder als äußere Hülle eines Schlauches ausgebildet ist.

Kabel, Leitungen oder Schläuche der gattungsgemäßen Art sind auch in der Medizintechnik seit langem bekannt. Hochflexible Kabel und Leitungen werden vor allem als Anschluss- oder Versorgungsleitungen überall dort eingesetzt, wo der Verbraucher bei der Inbetriebnahme Dreh- oder Schwenkbewegungen auszuführen hat. So wird z.B. im medizinischen Bereich eine möglichst freie Bewegbarkeit der durch elektrische Energie versorgten Mess-, Steuer- oder Behandlungsgeräte gefordert. Diese Forderung besteht ebenso für einadrige, z. B. koaxiale Versorgungsleitungen für chirurgische Instrumente als auch für die vieladrigen, an den Enden z. B. mit Messköpfen versehenen Datenkabeln, die der medizinischen Untersuchung dienen (DE-PS 36 36 621).

Insbesondere in den Fällen, wo die elektrischen Kabel oder auch z. B. Beatmungsschläuche wegen der gewünschten Flexibilität und der Möglichkeit mehrfacher Sterilisation mit einem Außenmantel aus Silikonkautschuk ausgestattet sind, erweist sich der an der Außenfläche befindliche oder die Außenfläche des flexiblen Gutes bildende sonst vorteilhafte Silikonkautschuk wegen seiner oberflächlichen Klebrigkeit oder Haftfähigkeit als weniger geeignet. Besonders auffallend treten diese Eigenschaften hervor, wenn die bekannten Kabel oder Schläuche bei medizinischen Untersuchungen mit der menschlichen Haut in Berührung kommen. Versuche, die Silikonkautschuk - Oberfläche gleitfähig zu machen, etwa durch Bepudern mit Talkum oder Benetzen mit einem Fettlöser, etwa mit einer Pril - Lösung, haben nicht zu einer dauerhaften Lösung geführt. Das aufgebrachte Talkum - Puder wird bei Benutzung der elektrischen Leitung oder des Schlauches abgewischt, das Puder staubt und verschmutzt die an Kabel oder Leitungen oder auch die an Schläuche angeschlossenen medizinischen Geräte.

Bekannt ist es bereits (US-A- 5,916,940), der aus einem Silikonkautschuk bestehenden Isolierung eines elektrischen Leiters beispielsweise Calcium Stearat zuzusetzen, um die Haftfestigkeit an der Grenzfläche zwischen der Leiteroberfläche und der angrenzenden Isolierung herabzusetzen. Diese bekannte Art der Zumengung von Metallseifen allein trägt aber nichts dazu bei, eine beanstandete Klebrigkeit an der äußeren Oberfläche der Isolierung zu vermeiden.

Auch ein bekanntes Verfahren zur Längsabdichtung von elektrischen Kabeln (US-A-4,451,692) trägt nichts zur Lösung der der Erfindung zugrunde liegenden Aufgabe bei. Die Längsabdichtung erfolgt hierbei nämlich durch injezieren einer Dichtmasse aus z.B. unvulkanisiertem Silikonkautschuk, der Silikonöl und Calcium Stearat enthält, in das Innere des Kabels, um die dortigen Hohlräume auszufüllen. Abgesehen davon, dass nach dem Aushärten der Dichtmasse im Inneren des Kabels der Silikonkautschuk keine Verbindung mit der äusseren Umgebung hat, also auch mit menschlicher Haut nicht in Berührung kommt, wird von einer Dichtmasse, wie die vorliegende, eine gute Haftfähigkeit zu den umgebenden Materialien gefordert. Eine Eigenschaft des Silikonkautschuks, die mit der Erfindung gerade vermieden wird.

Bekannt ist auch der Einsatz von Zinkstearat bei der Herstellung einer Isolierung für einen elektrischen Leiter, wobei hier das Zinkstearat ebenfalls Mischungsbestandteil des Silikonkautschuks ist (EP 1006 164 A2). Die Oberflächenklebrigkeit des Silikonkautschuks wird durch diesen Mischungsbestandteil allein weder verringert noch ist beabsichtigt, mit der vorgeschlagenen Maßnahme die Oberfläche der Leiterisolierung gleitfähiger zu machen.

Ausgehend von diesem Stand der Technik liegt daher der Erfindung die Aufgabe zugrunde, die insbesondere für die angesprochenen Zwecke vorteilhaft eingesetzten Silikonkautschuke so zu ertüchtigen, daß deren nachteilige Haft- oder Klebefähigkeit dauerhaft vermieden ist.

Erreicht wird dies gemäß der Erfindung dadurch, dass in die Oberfläche der äußeren Umhüllungdes Kabels, der Leitung oder des Schlauches von Außen her Metallseifen integriert sind. Nachteilige Auswirkungen auf die vorteilhaften Eigenschaften des Silikonkautschuks sind nicht erkennbar, die nachteilige Klebrigkeit der Oberfläche eines aus diesem Werkstoff hergestellten langgestreckten Gutes ist jedoch dauerhaft vermieden. Darüberhinaus sind sonst gegenüber dem Silikonkautschuk auftretende allergische Hautreaktionen ausgeschlossen.
Diese durch die Erfindung erzielten Vorteile sind erreichbar bei solchen Silikonkautschukmischungen, die Metallseifen als Mischungsbestandteil nicht enthalten, als auch bei solchen Silikonkautschuken, denen, wie aus dem Stand der Technik bekannt, z.B. Calcium- oder Zinkstearate als Mischungsbestandteile von vornherein zugegeben werden

Als für die Erfindung geeignet haben sich Metallseifen auf der Basis von Metallstearaten erwiesen, beispielsweise Aluminium-, Barium-, Zink-, Zinn oder Calcium- bzw. Magnesiumstearat. Aus der Vielzahl auch sonst noch geläufiger Metallstearate haben sich das Calciumstearat sowie das Magnesiumstearat als für die Zwecke der Erfindung am vorteilhaftesten erwiesen.

Eine andere Möglichkeit zur Durchführung der Erfindung ist die, Metallseifen aus der Gruppe der Palminate, der Oleate oder der Ricinoleate zu verwenden oder auf das 12 -Hydroxistearat, das Naphtenat, auf das Tallat oder ähnliche zurückzugreifen, um die oberflächliche Klebrigkeit oder Haftfähigkeit des Silikonkautschuks dauerhaft zu reduzieren oder ganz auszuschalten.

Zur Lösung des der Erfindung zugrunde liegenden Problems enthält der erfindungsgemäß verwendete Silikonkautschuk 0,1 bis 3,0 Gew. %, vorzugsweise 0,5 bis 1,5 Gew.% Metallseifen. Der Silikonkautschuk selbst kann vorteilhaft ein kaltvernetzender 2-Komponenten Silikonkautschuk sein. Die chemische Basis solcher Silikonkautschuke, das sind Siliconpolymere, besteht aus linearen Siliconölen mit Hydroxi-, Vinyl- oder anderen reaktiven Gruppen. Diese Polymere lassen sich z. B. schon bei Raumtemperatur auf unterschiedliche Weise vernetzen, wobei mehr oder weniger weitmaschige Strukturen mit ausgeprägtem elastischen Verhalten entstehen. Solche 2-Komponenten bei Raumtemperatur vernetzende Silikonkautschuke sind z. B. als so genannte RTV - 2 Silikonkautschuke im Handel. Bei der möglichen Kondensationsvernetzung dieser Silikonpolymere reagiert ein α,ω - Dihydroxipolydimethylsilan reversibel mit Kieselsäureestern in Anwesenheit von Katalysatoren, wie z. B. Dibutylzinndilaurat, unter Abspaltung von Essigsäure. Die Additionsvernetzung dagegen beruht auf der Addition von Si-H an Doppelbindungen. Dabei werden bekanntlich Salze und Komplexe des Platins, Palladiums oder Rhodiniums als Katalysatoren verwendet. Wesentlich für beide Vernetzungssysteme ist, dass bei der jeweiligen Vernetzungsreaktion umweltschädliche Reaktionsprodukte nicht entstehen. Dabei hat die Additionsvernetzung noch den besonderen Vorteil, dass die Vernetzungsreaktion für den Silikonkautschuk praktisch schrumpffrei erfolgt. Für die Zwecke der Erfindung hat sich daher ein solches Silikonpolymer als besonders vorteilhaft erwiesen.

Geeignet zur Durchführung der Erfindung ist aber auch ein platinvernetzender 1 - Komponenten Silikonkautschuk, wie er beispielsweise unter dem Handelsnamen ELASTOSIL der Firma Wacker - Chemie bekannt ist. Auch bei diesem Silikonpolymer werden durch die Vernetzungsreaktion keinerlei umweltschädliche Spaltprodukte freigesetzt.

Zur Verstärkung der genannten Silikonkautschuke und zur Gewährleistung einer hohen chemischen Reinheit für die insbesondere in der Medizintechnik eingesetzten erfindungsgemäßen Produkte hat es sich in Weiterführung der Erfindung als vorteilhaft erwiesen, dem Silikonpolymer als feinteilige Zusatzkomponente pyrogene Kieselsäure zuzumischen.

Die Erfindung betrifft auch ein Verfahren zur Herstellung eines langgestreckten Gutes. Dabei wird die Silikonkautschukmischung, mit oder ohne Metallseifen als Mischungsbestandteil, kalt, d.h., bei Raumtemperatur oder wenig darüber, z.B. bei 25° bis 35°C, zur äußeren Kabel- oder Leitungsumhüllung oder zum Schlauch geformt und auf die Oberfläche dieses Gutes werden Metallseifen aufgebracht. Anschließend wird die ausgeformte Mischung einem Vernetzungsprozess unterworfen, die Vernetzungstemperatur beträgt beispielsweise 180° bis 220°C.

Das Aufbringen der als Feststoffteitchen vorliegenden Metallseifen auf das Gut erfolgt durch oberflächlichen Auftrag, beispielsweise durch Hindurchführen des noch unvernetzten Gutes durch einen an sich bekannten Puderkasten und durch ein anschließendes Abstreifen überschüssigen Materials. Man kann aber auch so vorgehen, dass die als feinteilige Feststoffe vorliegenden Metallseifen elektrostatisch auf die Oberfläche des Gutes aufgetragen werden.

Ein besonders vorteilhaftes Herstellungsverfahren ergibt sich jedoch dadurch, dass die Metallseifen der Silikonkautschukmischung zugesetzt und diese Mischung kalt, bei Raumtemperatur oder wenig darüber, zur äußeren Kabel- oder Leitungshülle oder zum Schlauch geformt wird. Anschließend werden auf die äußere Oberfläche des Gutes erneut Metallseifen in feinteiliger Form aufgetragen, also in die Oberfläche integriert, bevor schließlich die ausgeformte Mischung vernetzt wird. Bei dieser Variante des erfindungsgemäßen Verfahrens wird in besonders hohem Maße die Klebrigkeit der Silikonkautschuk Oberfläche reduziert bzw. unterbunden. Die Dicke des äußeren Materialauftrages an feinteiligen Metallseifen liegt in allen Fällen lediglich im µ - Bereich.

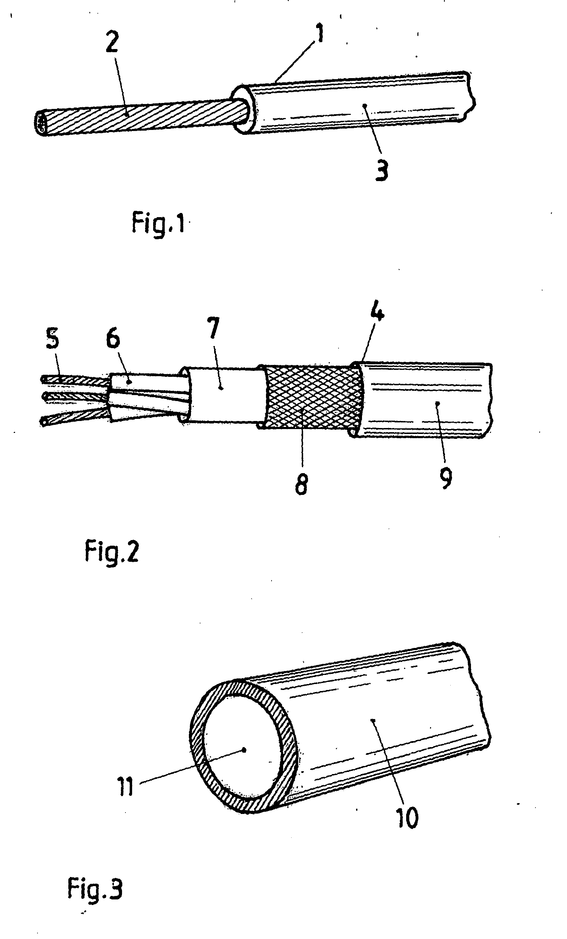

Die Erfindung sei an Hand der in den Figuren 1 bis 3 dargestellten Ausführungsbeispiele näher erläutert.

Die Figur 1 zeigt eine hochflexible, mit Silikonkautschuk isolierte Aderleitung 1, wie sie beispielsweise auch in der Medizintechnik Anwendung findet. Der Litzenleiter 2 ist hierbei von der Hülle 3 aus dem nach der Erfindung durch Zugabe von Calciumstearat ertüchtigten Silikonkautschuk umschlossen. Diese Hülle, die gleichzeitig elektrische Isolierung und Mantel ist und bei der medizinischen Behandlung von Patienten Hautberührung hat, weist an der Oberfläche, beispielsweise durch eine Bepuderung vor der Vernetzung des Silikonpolymers feinteiliges Calciumstearat auf. Eine durch Augenschein erkennbare und messbare Beschichtung ist an der erfindungsgemäß behandelten Leitung nicht erkennbar. Auch nach den in der Medizintechnik, und hier vor allem in Operationsbereichen, notwendigen wiederholten Sterilisationsbehandlungen solcher Leitungen bei Temperaturen um die 140°C; behält die erfindungsgemäß ausgebildete Leitung 1 ihren gleitfähigen Charakter bei.

Eine flexible Geräteanschlussleitung für die Medizintechnik veranschaulicht die Figur 2. Die Seele dieser Anschlussleitung 4 besteht aus drei mit einem Fluorkunststoff, beispielsweise PFE, das ist ein Tetrafluorethylen/Hexafluorpropylen-Copolymer, isolierten Litzenleitern 5. Die Isolierung ist mit 6 bezeichnet, die aus den Litzenleitern 5 und der Isolierung 6 bestehenden Adern sind miteinander verseilt und von einem sogenannten Innenmantel 7, zweckmäßig ebenfalls aus einem geeigneten Fluorpolymer, z.B. aus dem oben erwähnten PFE oder aus einem TFA/PFA, d.h. einem Tetrafluorethylen-Perfluoralkylvinylether-Copolymerisat, umschlossen. Die Verwendung von extrudierfähigen Fluorpolymeren hat sich wegen der Häufigkeit notwendiger Sterilisationsbehandlungen und der hierbei auftretenden erhöhten Temperaturen in der Medizintechnik als besonders vorteilhaft erwiesen. Das Geflecht 8, beispielsweise aus Kevlarfäden, dient als Zugkräfte aufnehmendes Element im Kabelaufbau, bevor der erfindungsgemäße Mantel 9, bestehend aus einem Polydimethylsiloxan mit Vinyl - Gruppen, pyrogener Kieselsäure, Magnesiumstearat und diversen Additiven, aufgebracht wird. Nach dem Aufbringen dieser Mischung auf das Geflecht 8 erfolgt eine Bedeckung des Mantels 9 z.B. mit einem feinteiligen Magnesiumstearat, dass in die Oberfläche des noch unvernetzten Mantels 9 integriert wird. Anschließend erfolgt die Vernetzung des Mantelmaterials bei Temperaturen von beispielsweise 25° bis 35°C.

Die Figur 3 schließlich zeigt einen verformbaren Schlauch für die Medizintechnik. Dieser Schlauch dient hier zum Zuführen und / oder Abführen flüssiger Substanzen, aber auch zum Führen von Beatmungsluft zu einem Patienten. Dabei können im Innern des Schlauches Stützelemente, wie Stege und dergleichen, vorgesehen sein; der Schlauch kann aber auch, wie bekannt, mit Außenrippen versehen sein. Diese Elemente dienen unter anderem dazu, ein Abknicken des Schlauches 9 und damit ein Verschließen des das Medium führenden langgestreckten Hohlraumes 11 zu unterbinden. Selbstverständlich können auch Heizelemente zur Temperierung des geführten Mediums vorgesehen sein, beispielsweise entsprechend EP 0556 561.

Der Schlauch 10 ist, ebenso wie die Mäntel 3 und 9 der Ausführungsbeispiele nach den Figuren 1 und 2, aus einem handelsüblichen Silikonpolymer hergestellt, in diesem Fall z. B. aus einem kaltvernetzenden 2 - Komponenten Silikonkautschuk, der zur Vermeidung von schädlichen Nebenprodukten bei der Vernetzungsreaktion additionsvernetzend ist. Der Mischung selbst sind auch wieder in Durchführung der Erfindung pyrogene Kieselsäure und Calcium- oder Magnesiumstearat in einer Menge von 0,1 bis 3,0Gew.% beigegeben. Nach der für Silikonpolymere üblichen Extrusion des Schlauches 10 erfolgt das oberflächliche Aufbringen der Metallseifen, im vorliegenden Ausführungsbeispiel des Calcium- oder Magnesiumstearats in feinteiliger Form. Auch hier zeigt die Schlauchoberfläche, ebenso wie die Kabeloberfläche entsprechend den Figuren 1 und 2, eine gegenüber nicht behandelten oder mit Talkum bzw. Seifen (Pril) behandelten Silikon - Oberflächen eine deutlich verminderte Reibung, etwa auf menschlicher Haut, ebenso wie eine reduzierte oder beseitigte allergische Hautreaktion.

## Patentansprüche

1. Langgestrecktes Gut mit einer Hülle aus einem Silikonkautschuk, wobei die Hülle die äußere Umhüllung (Mantel) eines elektrischen Kabels oder einer Leitung bildet oder als äußere Hülle eines Schlauches ausgebildet ist, **dadurch gekennzeichnet, dass** in die Oberfläche der äußeren Umhüllung des Kabels, der Leitung oder des Schlauches von Außen her Metallseifen integriert sind.

2. Langgestrecktes Gut nach Anspruch 1, **dadurch gekennzeichnet, dass** der Silikonkautschuk zusätzlich Metallseifen als Mischungskomponente enthält.

3. Langgestrecktes Gut nach Anspruch 1, **dadurch gekennzeichnet dass** Metallseifen auf der Basis von Metallstearaten verwendet sind.

4. Langgestrecktes Gut nach Anspruch 1 bis 3, **dadurch gekennzeichnet, dass** die Metallstearate Calcium- oder Magnesiumstearate sind.

5. Langgestrecktes Gut nach Anspruch 1 bis 4, **dadurch gekennzeichnet, dass** als Metallseifen das Palminat, das Oleat, das Ricinoleat, das 12-Hydroxystearat, das Naphthenat, das Tallat oder ähnliche dienen.

6. Langgestrecktes Gut nach Anspruch 1 bis 5, **dadurch gekennzeichnet, dass** der Silikonkautschuk der Hülle 0.1 bis 3,0 Gew.%, vorzugsweise 0,5 bis 1,5 Gew.%, Metallseifen enthält.

7. Langgestrecktes Gut nach Anspruch 1 bis 6, **dadurch gekennzeichnet, dass** der Silikonkautschuk ein kaltvernetzender 2-Komponenten Silikonkautschuk ist.

8. Langgestrecktes Gut nach Anspruch 7, **dadurch gekennzeichnet, dass** der kaltvernetzende 2-Komponenten Silikonkautschuk ein additionsvernetzender Silikonkautschuk ist.

9. Langgestrecktes Gut nach Anspruch 1 bis 8, **dadurch gekennzeichnet, dass** der Silikonkautschuk ein platinvernetzender 1-Komponenten Silikonkautschuk ist.

10. Langgestrecktes Gut nach Anspruch 1 bis 9, **dadurch gekennzeichnet, dass** der Silikonkautschuk pyrogene Kieselsäure enthält.

11. Verfahren zur Herstellung eines langgestreckten Gutes nach Anspruch 1 bis 10, **dadurch gekennzeichnet, dass** die Silikonkautschukmischung kalt zur äußeren Kabel- oder Leitungsumhüllung oder zum Schlauch geformt wird, dass auf die Oberfläche dieses Gutes Metallseifen aufgebracht werden und dass schließlich die ausgeformte Mischung vernetzt wird.

12. Verfahren zur Herstellung eines langgestreckten Gutes nach Anspruch 1 bis 10, **dadurch gekennzeichnet, dass** zunächst Metallseifen der Silikonkautschukmischung zugesetzt werden, dass diese Mischung kalt zur äußeren Kabel- oder Leitungsumhüllung oder zum Schlauch geformt wird und dass auf die äußere Oberfläche diese Gutes zusätzlich Metallseifen aufgebracht werden, bevor anschließend die ausgeformte Mischung vernetzt wird.

13. Verfahren zur Herstellung eines langgestreckten Gutes nach Anspruch 11 oder12, **dadurch gekennzeichnet, dass** die als Feststoffe vorliegenden Metallseifen auf das Gut durch oberflächliches Aufbringen und anschließendes Abstreifen überschüssigen Materials aufgetragen werden.

14. Verfahren zur Herstellung eines langgestreckten Gutes nach Anspruch 11 oder12, **dadurch gekennzeichnet, dass** die als Feststoffe vorliegenden Metallseifen auf die Oberfläche des Gutes elektrostatisch aufgetragen werden.

15. Verfahren zur Herstellung eines langgestreckten Gutes nach Anspruch 11 oder 12, **dadurch gekennzeichnet, dass** die Dicke des Materialauftrages auf die Oberfläche des Gutes im µ-Bereich liegt.

## Claims

1. Elongate article with a sheath made of a silicone rubber, the sheath forming the outer covering (casing) of an electric cable or a line or being configured as an outer sheath of a hose, **characterised in that** metal soaps are integrated from the outside into the surface of the outer covering of the cable, the line or the hose.

2. Elongate article according to claim 1, **characterised in that** the silicone rubber additionally contains metal soaps as a mixture component.

3. Elongate article according to claim 1, **characterised in that** metal soaps based on metal stearates are used.

4. Elongate article according to claim 1 to 3, **characterised in that** the metal stearates are calcium or magnesium stearates.

5. Elongate article according to claim 1 to 4, **characterised in that** palminate, oleate, ricinoleate,12-hydroxystearate, naphthenate, tallate or the like are used as metal soaps.

6. Elongate article according to claim 1 to 5, **characterised** that the silicone rubber of the sheath contains 0.1 to 3.0% by weight, preferably 0.5 to 1.5% by weight metal soaps.

7. Elongate article according to claim 1 to 6, **characterised in that** the silicone rubber is a cold cross-linking 2-component silicone rubber.

8. Elongate article according to claim 7, **characterised in that** the cold cross-linking 2-component silicone rubber is an addition cross-linking silicone rubber.

9. Elongate article according to claim 1 to 8, **characterised in that** the silicone rubber is a platinum cross-linking 1-component silicone rubber.

10. Elongate article according to claim 1 to 9, **characterised in that** the silicone rubber contains pyogenic silica.

11. Method for producing an elongate article according to claim 1 to 10 **characterised in that** the silicone rubber mixture is cold formed into the outer cable or line covering or into the hose, **in that** metal soaps are applied to the surface of this article and **in that** the formed mixture is finally cross-linked.

12. Method for producing an elongate article according to claim 1 to 10, **characterised in that** firstly metal soaps are added to the silicone rubber mixture, **in that** this mixture is cold formed into the outer cable or line covering or the hose and **in that** metal soaps are additionally applied to the outer surface of this article before the formed mixture is then cross-linked.

13. Method for producing an elongate article according to claim 11 or 12, **characterised in that** the metal soaps present as solids are applied to the article by surface application and subsequent stripping off of excess material.

14. Method for producing an elongate article according to claim 11 or 12, **characterised in that** the metal soaps present as solids are electrostatically applied to the surface of the article.

15. Method for producing an elongate article according to claim 11 or 12, **characterised in that** the thickness of the material application to the surface of the article is in the µ range.

## Revendications

1. Article allongé, dont une enveloppe en un caoutchouc de silicone forme l'enveloppe extérieure (gaine) d'un câble électrique ou d'un conducteur ou constitue l'enveloppe extérieure d'un tuyau,
**caractérisé en ce que**
des savons de métaux sont intégrés de l'extérieur dans la surface de l'enveloppe extérieure du câble, du conducteur ou du tuyau.

2. Article allongé selon la revendication 1,
**caractérisé en ce que**
le caoutchouc de silicone contient en outre des savons de métaux comme composants du mélange.

3. Article allongé selon la revendication 1,
**caractérisé en ce que**
les savons de métaux sont à base de stéarates métalliques.

4. Article allongé selon les revendications 1 à 3,
**caractérisé en ce que**
les stéarates métalliques sont des stéarates de calcium ou de magnésium.

5. Article allongé selon les revendications 1 à 4,
**caractérisé en ce que**
les savons de métaux sont du palminate, de l'oléate, du ricinoléate, du 12-hydroxystéarate, du naphthénate, du tallate ou analogues.

6. Article allongé selon les revendications 1 à 5,
**caractérisé en ce que**
le caoutchouc de silicone de l'enveloppe contient des savons de métaux selon 0,1 % à 3,0 % en poids et de préférence entre 0,5 % et 1,5 % en poids.

7. Article allongé selon les revendications 1 à 6,
**caractérisé en ce que**
le caoutchouc de silicone est un caoutchouc de silicone à deux composants réticulé à froid.

8. Article allongé selon la revendication 7,
**caractérisé en ce que**
le caoutchouc de silicone à deux composants réticulé à froid est un caoutchouc au silicone réticulé par addition.

9. Article allongé selon les revendications 1 à 8,
**caractérisé en ce que**
le caoutchouc de silicone est un caoutchouc de silicone mono-composant réticulé par le platine.

10. Article allongé selon les revendications 1 à 9,
**caractérisé en ce que**
le caoutchouc au silicone contient de l'acide silicique pyrogéné.

11. Procédé de fabrication d'un article allongé selon les revendications 1 à 10,
**caractérisé en ce qu'**
on met en forme le mélange de caoutchouc de silicone à froid pour former l'enveloppe extérieure du câble ou du conducteur ou encore pour former le tuyau,
on applique des savons de métaux sur la surface de cet article, et
on fait ensuite réticuler le mélange mis en forme.

12. Procédé de fabrication d'un article allongé selon les revendications 1 à 10,
**caractérisé en ce qu'**
on ajoute tout d'abord les savons de métaux au mélange de caoutchouc de silicone,
on forme ce mélange à froid pour constituer l'enveloppe extérieure du câble ou du conducteur ou pour former le tuyau, et
on applique en plus des savons de métaux sur la surface extérieure de cet article avant de faire réticuler le mélange moulé.

13. Procédé de fabrication d'un article allongé selon la revendication 11 ou 12,
**caractérisé en ce qu'**
on applique les savons de métaux se présentant sous forme de produits solides sur l'article par application en surface et ensuite raclage du produit en excédent.

14. Procédé de fabrication d'un article allongé selon la revendication 11 ou 12,
**caractérisé en ce que**
les savons de métaux se présentant sous forme de produits solides sont appliqués par voie électrostatique à la surface de l'article.

15. Procédé de fabrication d'un article allongé selon la revendication 11 ou 12,
**caractérisé en ce que**
l'épaisseur de l'application de matière à la surface du produit est du domaine du micron (µ).
